# NEUE EUROPÄISCHE PATENTSCHRIFT

(11) **EP 2 454 118 B2**
(45) Veröffentlichungstag und Bekanntmachung des Hinweises auf die Entscheidung über den Einspruch: **26.05.2021**
(45) Hinweis auf die Patenterteilung: 06.11.2013
(21) Anmeldenummer: 10730480.0
(22) Anmeldetag: 12.07.2010
(51) Int. Cl.: B60L 11/18, H02J 7/00, H02J 7/02

(54) **VORRICHTUNG ZUR INDUKTIVEN ÜBERTRAGUNG ELEKTRISCHER ENERGIE**
DEVICE FOR THE INDUCTIVE TRANSFER OF ELECTRIC ENERGY
SYSTÈME DE TRANSFERT INDUCTIF D'ÉNERGIE ÉLECTRIQUE

(30) Priorität: 14.07.2009 DE 102009033236
(43) Veröffentlichungstag der Anmeldung: 23.05.2012
(73) Patentinhaber: Conductix-Wampfler GmbH, 79576 Weil am Rhein-Märkt (DE)
(72) Erfinder: WECHLIN, Mathias, 79400 Kandern (DE); GREEN, Andrew, 79429 Malsburg-Marzell (DE)
(74) Vertreter: Charrier Rapp & Liebau
(86) Internationale Anmeldenummer: PCT/EP2010/059995
(87) Internationale Veröffentlichungsnummer: WO 2011/006876

(56) Entgegenhaltungen:
- EP-A1- 0 379 465
- WO-A1-2009/081115
- WO-A2-2008/051611
- DE-A1- 19 741 279
- DE-A1-102007 033 654
- US-A1- 2007 228 833
- US-A1- 2009 001 932

## Beschreibung

Die Erfindung betrifft eine Vorrichtung zur induktiven Übertragung elektrischer Energie nach dem Oberbegriff des Anspruchs 1. Derartige Vorrichtungen dienen der induktiven Ladung einer in einem Elektrofahrzeug eingebauten, wiederaufladbaren Batterie. Während der Energieübertragung wird in einem räumlichen Bereich zwischen einer stationären Primärspule und einer fahrzeugseitigen Sekundärspule ein magnetisches Feld hoher Feldstärke und Flussdichte aufgebaut. Dies ist notwendig, um in der Sekundärspule einen für die angestrebte Übertragungsleistung ausreichend hohen Strom zu induzieren.

Gelangen Menschen, menschliche Extremitäten oder Tiere in diesen Bereich, so können Körperströme induziert werden. Zwar ist anzunehmen, dass dies im Regelfall zu keiner unmittelbaren Gefährdung führt, insbesondere da keine zeitlich ausgedehnte Präsenz in diesem Bereich zu befürchten ist. Die Möglichkeit einer versehentlichen Belastung von insbesondere Kindern oder Haustieren durch ein starkes Magnetfeld ist jedoch geeignet, die Akzeptanz der induktiven Energieübertragung in manchen Bevölkerungskreisen zu beeinträchtigen.

Auch ist zu beachten, dass Menschen elektrisch leitfähige Gegenstände in Form von Ringen, Armbändern, Werkzeugen, Implantaten und dergleichen am Körper tragen können. Für Tiere gilt dies in Form von Halsbändern. Werden solche Gegenstände einem starken magnetischen Wechselfeld ausgesetzt, so werden in diesen Wirbelströme induziert, die zu einer von Material, Dauer der Einbringung, der Ausrichtung zum Feld und der Höhe der Feldstärke abhängigen Erwärmung führen. Bei Vorhandensein entsprechender Bedingungen können Temperaturen erreicht werden, die zu Beschädigungen und/oder Gefährdungen führen können. Solche könnten ferner auch von elektrisch leitfähigen Gegenständen ausgehen, die von spielenden Kindern absichtlich aus Neugier in den Feldbereich einer induktiven Energieübertragungsvorrichtung eingebracht werden könnten.

Aufgrund der Charakteristik bisheriger Anwendungen für induktive Energieübertragungssysteme wurde eine Gefährdung solcher Art als nicht relevant bewertet. Bei Fahrzeugen mit Fahrer kann im Rahmen einer Schulung darauf hingewiesen werden, im Betrieb auf das Vorhandensein von Fremdkörpern zu achten und diese vor Inbetriebnahme der induktiven Übertragung zu beseitigen oder die induktive Übertragung im Zweifelsfall zu unterbrechen. Für einen weitgehend automatischen Betrieb oder bei höheren Sicherheitsanforderungen, die beim Einsatz derartiger Systeme in öffentlich zugänglichen Bereichen zu veranschlagen sind, erscheint jedoch die Präsenz von Fremdkörpern im Feldbereich als offenes Sicherheitsproblem. Kritisch ist hierbei insbesondere das Eindringen eines Fremdkörpers während der laufenden Energieübertragung, weil keinesfalls anzunehmen ist, dass der Fahrer eines Fahrzeugs den Feldbereich, d.h. den Zwischenraum zwischen den Gehäusen der Primärspule und der Sekundärspule während der Energieübertragung beobachtet. Vielmehr wird das Fahrzeug im Regelfall während eines überwiegenden Teils eines Ladevorgangs vollkommen unbeaufsichtigt sein.

Aus der US 2007/0145830 A1 ist ein System zur kontaktlosen Übertragung elektrischer Energie zu elektronischen Geräten bekannt, das eine Vielzahl von Primärspulen aufweist. Hierdurch erübrigt sich eine genaue Ausrichtung zwischen Primär- und Sekundärspule. In der Schrift wird zwar unter anderem das Problem der Präsenz metallischer Fremdkörper angesprochen, der Einsatz eines Metalldetektors jedoch als unbrauchbar verworfen. Vielmehr wird durch schaltungstechnische Maßnahmen erreicht, dass das System erst bei Annäherung eines Schwingkreises aus einer Sekundärspule und einem parallelgeschalteten Abgleichkondensator in Resonanz gerät und der Primärstrom dadurch stark ansteigt, wobei er sich im wesentlichen auf eine oder wenige Primärspulen in unmittelbarer Nähe der Sekundärspule konzentriert. Ein leitfähiger Fremdkörper ist in diesem Fall kein Problem mehr, da er keinen resonanzfähigen Schwingkreis darstellt.

Die US 2009/0001932 A1 lehrt eine Vorrichtung zum induktiven Laden der Batterie eines beweglichen elektronischen Gerätes, die mit Mitteln zur Erkennung eines Fremdkörpers ausgerüstet ist. Das Vorhandensein eines solchen Fremdkörpers wird durch eine Überwachung des Verlaufs der Primärspannung detektiert, die im Normalbetrieb durch eine Modulation des Laststromes von der Sekundärseite aus beeinflusst wird. Zusätzlich ist ein optischer Sensor in Form einer Lichtschranke vorgesehen, um ein zu ladendes elektronisches Gerät von einem Fremdkörper zu unterscheiden.

Die WO 2008/051611 A1 offenbart eine Vorrichtung zum induktiven Laden der Batterie eines elektrisch angetriebenen Fahrzeugs mit jeweils mehreren Primär- und Sekundärspulen. Das Problem der möglichen Präsenz von Fremdkörpern im Bereich des Magnetfeldes wird in dieser Schrift jedoch nicht behandelt.

Die DE 10 2007 033 654 A1 offenbart ein System umfassend einen Wagen und zumindest eine Basiseinheit, wobei der Wagen eine Sekundarspule umfasst, die mit einem von der Basiseinheit umfassten Primärleiter induktiv koppelbar ist, wobei von der Basiseinheit eine Verfahrvorrichtung zur Verringerung des Abstandes zwischen Primärleiter und Sekundarspule umfasst ist.

Die DE 197 41 279 A1 offenbart eine Vorrichtung zum Aufladen von Akkumulatoren in einem elektrischen Gerät.

Der Erfindung liegt die Aufgabe zugrunde, eine einfache und robuste Lösung zur Erkennung von Fremdkörpern im Feldbereich eines induktiven Energieübertragungssystems zu schaffen, um die Betriebssicherheit eines solchen Systems zu verbessern.

Diese Aufgabe wird erfindungsgemäß durch eine Vorrichtung mit den Merkmalen des Anspruchs 1 gelöst. Vorteilhafte Ausgestaltungen sind in den Unteransprüchen angegeben.

Erfmdungsgemäß verfügt bei einer Vorrichtung zur induktiven Übertragung elektrischer Energie von einer stationären Einheit mit mindestens einer Primärinduktivität zu einem benachbart zu dieser stehenden Fahrzeug mit mindestens einer Sekundärinduktivität die stationäre Einheit oder das Fahrzeug über eine Einrichtung zur Detektion des Vorhandenseins eines Gegenstandes innerhalb eines vorbestimmten Raumes, der zumindest den während der Energieübertragung zwischen der Primärinduktivität und der Sekundärinduktivität liegenden Raum umfasst. Hierbei weist die Detektionseinrichtung mehrere berührungslose Sensoren und eine mit diesen verbundene Auswertungseinrichtung mit einer Vergleichseinrichtung auf, welche die von den einzelnen Sensoren abgegebenen Signale untereinander vergleicht und ein Maß für eine Abweichung der Signale untereinander ermittelt, wobei die Auswertungseinrichtung eine Vergleichseinrichtung aufweist, welche die von den Sensoren abgegebenen Signale mit einem Referenzwert oder Referenzsignal vergleicht und ein Maß für eine Abweichung von dem Referenzwert oder Referenzsignal ermittelt, und/oder wobei die Auswertungseinrichtung ein Maß für eine zeitliche Änderung der von den Sensoren abgegebenen Signale ermittelt, und wobei die Auswertungseinrichtung mindestens einen Ausgang aufweist, an dem bei einer Abweichung der Signale untereinander, die ein vorbestimmtes Mindestmaß überschreitet, ein Signal ausgegeben wird, welches die Anwesenheit eines Fremdkörpers anzeigt, wenn auch eine Abweichung von dem Referenzwert oder Referenzsignal ein vorbestimmtes Mindestmaß überschreitet, und/oder eine zeitliche Änderung ein vorbestimmtes Mindestmaß überschreitet. Dies eröffnet die Möglichkeit, das Eindringen eines Fremdkörpers in den Feldbereich der Energieübertragung festzustellen und in geeigneter Weise zu reagieren.

Es sind berührungslose Sensoren, beispielsweise in Form von Ultraschall-, Radar- oder Infrarotsensoren oder elektronischer Bildsensoren vorgesehen, die zweckmäßigerweise zumindest teilweise in das gleiche Gehäuse wie die Primärinduktivität oder die Sekundärinduktivität der Energieübertragungsvorrichtung eingebaut oder daran angebaut sein können.

Mögliche Kriterien für die Erkennung der Anwesenheit eines Fremdkörpers im Feldbereich der Energieübertragung sind obligatorisch Abweichungen der einzelnen Sensorsignale untereinander, sowie zusätzlich das Abweichen eines Sensorsignals von einem Referenzwert oder -signal und/oder eine zeitliche Änderung der Sensorsignale. Ein typisches Indiz für das Eindringen eines Fremdkörpers in den Feldbereich der Energieübertragung bietet insbesondere das letztgenannte Kriterium. Zu den sinnvollen Reaktionen auf die Anwesenheit eines Fremdkörpers gehören insbesondere die Ausgabe eines Warnsignals, die Deaktivierung der Stromversorgung der Primärinduktivität sowie deren Reaktivierung bei einem Wiederaustritt des Fremdkörpers aus dem Feldbereich.

Nachfolgend werden Ausführungsbeispiele der Erfindung anhand der Zeichnungen beschrieben. In diesen zeigt
- Fig. 1: eine schematische Darstellung einer Ladestation zur induktiven Energieübertragung mit einem in Ladeposition befindlichen Elektrofahrzeug,
- Fig. 2: eine schematische Darstellung der Detektion eines Fremdkörpers durch eine erfindungsgemäße Anordnung mehrerer Sensoren,
- Fig. 3: die Sensoranordnung von Fig. 2 in einer schematischen Draufsicht und
- Fig. 4: eine Sensoranordnung mit nur einem einzigen Sensor, die nicht Gegenstand der Erfindung ist.

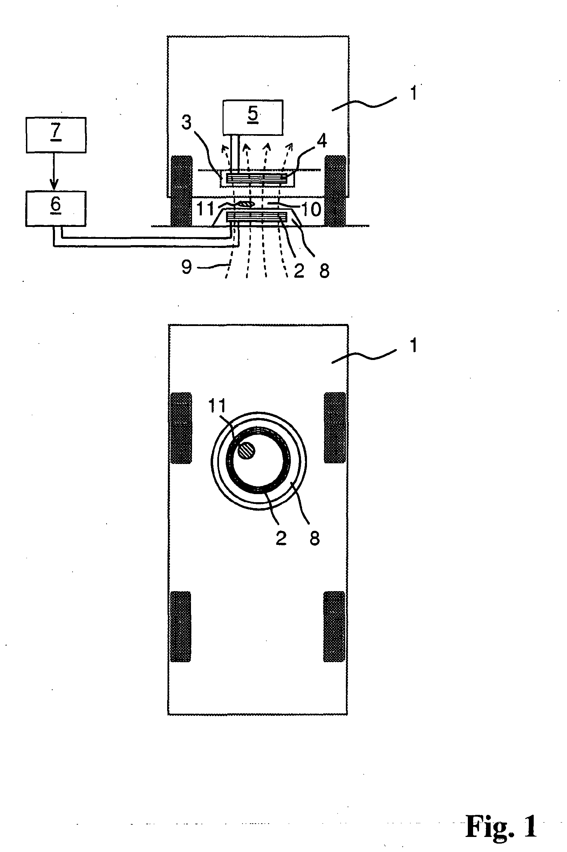

Fig. 1 zeigt ein Elektrofahrzeug 1, welches zum Aufladen seiner Batterie über der Primärspule 2 einer Ladestation steht, in einer schematischen Schnittansicht (oben) und in einer schematischen Draufsicht (unten). An der Unterseite des Fahrzeugs 1 befindet sich in einem Gehäuse 3 eine Sekundärspule 4, die mit einer Ladeelektronik 5 verbunden ist. Diese wandelt die Parameter der induktiv in die Sekundärspule 4 übertragenen elektrischen Leistung in zur Ladung der Batterie des Fahrzeugs 1 geeignete Werte. Die Primärspule 2 wird von einer Stromversorgungseinheit 6 der Ladestation gespeist und ist in einem Gehäuse 8 untergebracht, welches stationär an einem Fahrzeugabstellplatz angebracht ist. Die Stromversorgungseinheit 6 wird von einer Steuereinheit 7 der Ladestation gesteuert.

Gestrichelt sind in Fig. 1 einige Feldlinien 9 des von der Primärspule 2 im Betrieb erzeugten magnetischen Wechselfeldes angedeutet. Seine Hauptrichtung entspricht der Richtung der Spulenachse der Primärspule 2 und ist somit die Vertikalrichtung. In dem Zwischenraum 10 unmittelbar oberhalb des Gehäuses 8 der Primärspule 2 herrscht im Betrieb eine hohe magnetische Feldstärke und Flussdichte. Genau dort befindet sich ein Fremdkörper 11, der wie vorausgehend erläutert einem Gefährdungspotential ausgesetzt ist.

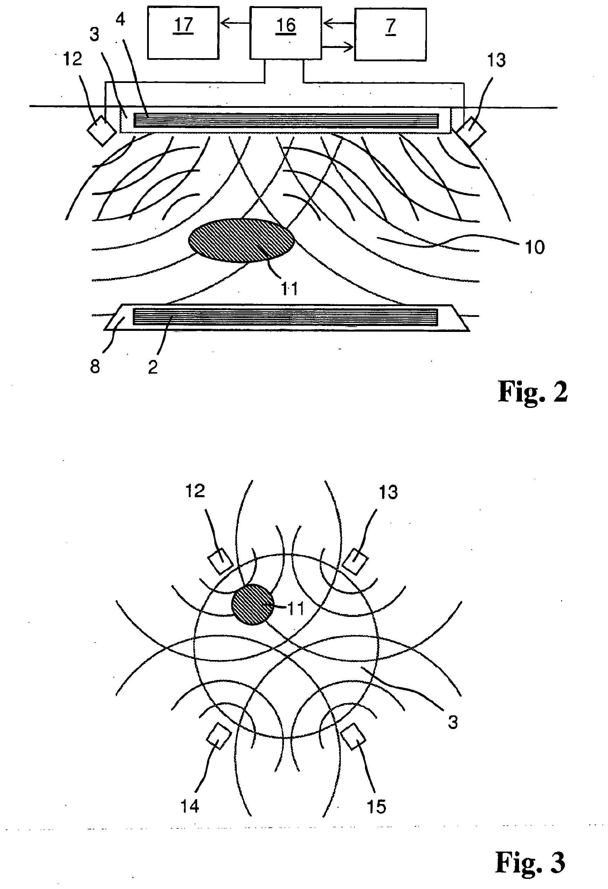

Ein Beispiel für eine erfindungsgemäße Sensoranordnung zur Erkennung des Fremdkörpers 11 zeigt Fig. 2 in einer Ansicht, die einer Vergrößerung eines Ausschnitts, nämlich der unmittelbaren Umgebung der Primärspule 2 und der Sekundärspule 4, aus dem oberen Teil von Fig. 1 entspricht. Unmittelbar neben dem Gehäuse 3 der Sekundärspule 4 sind zwei gleichartige Sensoren 12 und 13 angeordnet, die nach einem berührungslosen Funktionsprinzip arbeiten. Insgesamt sind noch zwei weitere Sensoren 14 und 15 gleicher Art vorgesehen, die nicht in Fig. 2, jedoch in der Draufsicht von Fig. 3 erkennbar sind. Die vier Sensoren 12 bis 15 sind zumindest annähernd symmetrisch in Form eines Quadrats oder Rechtecks angeordnet.

Wie in Fig. 2 und Fig. 3 durch Wellenfronten angedeutet ist, senden die Sensoren 12 bis 15 im aktivierten Zustand wellenförmige Signale aus, die von dem Fremdkörper 11 reflektiert werden, wobei die Reflexion von der Position, der Größe und dem Material des Fremdkörpers 11 abhängt. Die Sensoren 12 bis 15 empfangen die reflektierten Signale und geben jeweils ein Messsignal, das von dem empfangenen Reflexionssignal abhängt, an eine Auswertungseinrichtung 16 ab. Bei den Sensoren 12 bis 15 kann es sich beispielsweise um Ultraschall-, Radar- oder Infrarotsensoren handeln. Sie werden vor Beginn der induktiven Energieübertragung durch die Auswertungseinrichtung 16 aktiviert, wozu diese von der Steuereinheit 7 der Ladestation ein Signal erhält, welches den bevorstehenden Beginn der Energieübertragung anzeigt.

Alternativ zu aktiven Sensoren 12 bis 15 könnten auch passive Sensoren verwendet werden, beispielsweise passive Infrarotsensoren auf pyroelektrischer Basis, wie sie bei Bewegungsmeldern zur Beleuchtungssteuerung üblich sind. Solche Sensoren reagieren auf Wärmestrahlung und eignen sich damit insbesondere zur Detektion von Lebewesen oder Körperteilen von Lebewesen mit einer gegenüber der Umgebung erhöhten Temperatur, also für die Detektion einer besonders kritischen Art von Fremdkörper 11.

Die von den einzelnen Sensoren 12 bis 15 gelieferten Messsignale werden in der Auswertungseinrichtung 16 ständig untereinander und ggf. auch mit Referenzwerten oder Referenzssignalen verglichen. Bei der in Fig. 3 gezeigten Sensoranordnung würden ohne das Vorhandensein des Fremdkörpers 11 die von dem Sensor 12 gesendeten Signale durch die Oberfläche des Gehäuses 8 der Primärspule 2 überwiegend in Richtung des gegenüberliegenden Sensors 15 reflektiert und nur zu einem sehr geringen Teil zurück zu dem sendenden Sensor 12. Gleiches gilt für die beiden Sensoren 12 und 15 auch in der umgekehrten Richtung und für die beiden anderen einander gegenüberliegenden Sensoren 13 und 14 in beiden Richtungen. Bei Vorhandensein des Fremdkörpers 11 ist hingegen die Reflexion zurück zum jeweils sendenden Sensor wesentlich stärker. Dies ist ein erstes mögliches Kriterium für die Detektion eines Fremdkörpers 11 durch die Auswertungseinrichtung 16 anhand der Messsignale der Sensoren 12 bis 15.

Ferner ist die Stärke der reflektierten Signale bei einer unsymmetrischen Position des Fremdkörpers 11 in Bezug auf die Sensoren 12 bis 15, wie sie die Figuren 2 und 3 zeigen, bei den einzelnen Sensoren 12 bis 15 unterschiedlich. Selbst wenn ein Fremdkörper 11 bei seiner Bewegung zufällig in einer symmetrischen Position bezüglich der Sensoren 12 bis 15 zur Ruhe kommen sollte, so ist seine Position während seines Eindringens in den Feldbereich 10 der Energieübertragung zunächst entlang seiner Bewegungsbahn unsymmetrisch. Daher bieten Unterschiede zwischen den Messsignalen der Sensoren 12 bis 15 ein weiteres Kriterium für die Detektion eines Fremdkörpers 11 durch die Auswertungseinrichtung 16.

Darüber hinaus besteht eine weitere Möglichkeit zur Detektion eines Fremdkörpers 11 durch die Auswertungseinrichtung 16 darin, den zeitlichen Verlauf der Messsignale aufzuzeichnen und auf das Auftreten von signifikanten zeitlichen Änderungen hin zu überwachen. Die Bewegung eines Fremdkörpers 11 in dem von den Sensoren 12 bis 15 überwachten Raum 10 äußert sich nämlich in den Messsignalen der Sensoren 12 bis 15 durch das Auftreten signifikanter zeitlicher Änderungen. Es versteht sich, dass das Eindringen eines Fremdkörpers 11 in den überwachten Raum 10 von außen her notwendigerweise auch mit einer Bewegung innerhalb des Raumes 10 verbunden ist.

Die drei vorausgehend genannten Kriterien können von der Auswertungseinrichtung 16 auf die Messsignale der Sensoren 12 bis 15 parallel zueinander angewendet werden und nach geeigneten heuristischen Regeln miteinander verknüpft werden. Dabei muss das Kriterium, dass die Abweichung der Signale untereinander ein vorbestimmtes Mindestmaß überschreitet, stets angewandt werden. Beispielsweise kann zur Vermeidung von Fehlalarmen verlangt werden, dass alle drei Kriterien oder mindestens zwei von drei Kriterien auf das Eindringen eines Fremdkörpers 11 hindeuten, bevor ein Fremdkörper als erkannt angesehen wird. Ferner kann auch verlangt werden, dass Kriterien, die auf das Vorhandensein eines Fremdkörpers 11 hindeuten, stets für ein Zeitintervall vorbestimmter Mindestlänge erfüllt sein müssen, bevor ein Fremdkörper 11 endgültig als erkannt angesehen wird, um eine fehlerhafte Erkennung zu vermeiden.

Falls auch ein stationärer Fremdkörper 11 detektiert werden soll, eignet sich die Überwachung von Änderungen der Messsignale hierfür natürlich nicht als Erkennungskriterium und der Vergleich der verschiedenen Messsignale nur bedingt, da ein zufällig symmetrisch liegender Fremdkörper 11 nicht erkannt würde. In erster Linie ist jedoch die Detektion eines nachträglichen Eindringens eines Fremdkörpers 11 in den Feldbereich 10 nach dem Abstellen des Fahrzeugs 1 von Interesse, das stets mit einer Änderung und einer Unsymmetrie der verschiedenen Messsignale verbunden ist.

Unabhängig davon, welche Kriterien in der Auswertungseinrichtung 16 zur Erkennung eines Fremdkörpers 11 zur Anwendung kommen, und wie verschiedene Kriterien miteinander verknüpft werden, gibt die Auswertungseinrichtung 16 immer dann, wenn sie einen Fremdkörper 11 erkennt, ein Ausgangssignal an eine Anzeigeeinrichtung 17 aus, welche eine optische und/oder akustische Warnung abgibt. Darüber hinaus ist die Auswertungseinrichtung 16 auch mit der Steuereinheit 7 der Ladestation verbunden und gibt an diese ein Signal aus, welches die Energieübertragung, d.h. die Bestromung der Primärspule 2 unterbricht. Ferner wird eine Meldung an eine geeignete Stelle, z.B. an den Betreiber der Ladestation oder an den Fahrer des Fahrzeugs 1 abgesetzt.

In der Praxis ist es ausreichend, nicht unmittelbar zu reagieren, sobald eine Bewegung eines Fremdkörpers 11 im Feldbereich 10 wahrgenommen wird, sondern damit zu warten, bis davon auszugehen ist, dass es sich nicht nur um einen kurzzeitigen Durchtritt durch den Feldbereich 10 handelt. Wenn festgestellt wird, dass sich ein Mensch oder ein Tier vollständig oder teilweise im Feldbereich 10 der Energieübertragung aufhält, so kann zunächst mittels geeigneter Maßnahmen, beispielsweise über die Fahrzeughupe als Anzeigeeinrichtung 17, eine Warnung erfolgen. Wenn innerhalb einer gewissen Zeit kein Verlassen des überwachten Raumes 10 festgestellt wird, kann die Energieübertragung unterbrochen, d.h. über die Steuereinheit 7 die Stromversorgungseinheit 6 der Primärspule 2 deaktiviert werden. Bei unterbrochener Energieübertragung wird die Überwachung des Raumes 10 fortgesetzt. Wird später ein Verlassen des überwachten Bereiches festgestellt, so wird die Energieübertragung unmittelbar wieder aufgenommen. Hält der Präsenzstatus jedoch an, so kann eine Meldung an eine zuständige Stelle erfolgen, welche die Situation überprüft, nötigenfalls beseitigt und die Beseitigung quittiert. Wird die Energieübertragung über einen längeren Zeitraum unterbrochen oder abgebrochen, so dass es nicht als möglich erscheint, genügend Energie zu übertragen, erfolgt eine entsprechende Meldung an den Fahrer des Fahrzeugs 1 bzw. bei automatisiertem Betrieb an eine übergeordnete Anlagensteuerung.

In den Figuren 2 und 3 ist angenommen, dass die Sensoren 12 bis 15 fahrzeugseitig im Bereich der Sekundärspule 4 angeordnet sind. Die Anzeigeeinrichtung 17 kann sowohl fahrzeugseitig, z.B. in Form einer Benutzung der vorhandenen Fahrzeughupe, als auch außerhalb des Fahrzeugs als Bestandteil der Ladestation realisiert sein. Die Steuereinheit 7 befindet sich nicht an Bord des Fahrzeugs 1, sondern sie ist ein Bestandteil der Ladestation. Die Kommunikation der fahrzeugseitigen Auswertungseinrichtung 16 mit der Steuereinheit 7 findet daher drahtlos statt. Dies gilt auch für die Anzeigeeinrichtung 17, falls diese zur Ladestation gehört

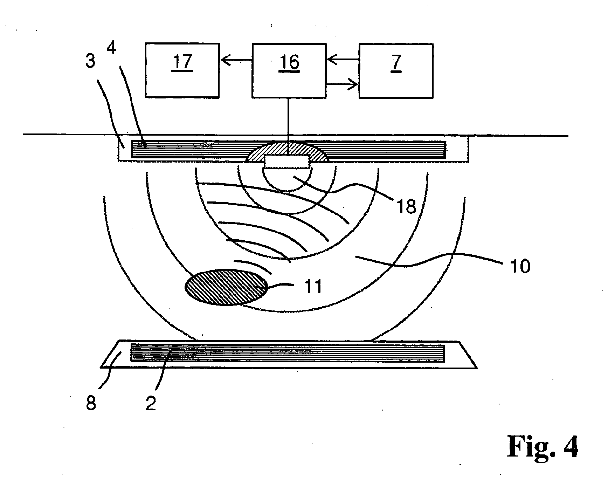

Fig. 4 zeigt eine gegenüber der vorausgehend beschriebenen Ausführungsform der Erfindung vereinfachte Variante, die nicht Gegenstand der Erfindung ist, die in der Verwendung nur eines einzigen Sensors 18 besteht. Ein solcher einziger Sensor 18 ist am besten zentral an dem Gehäuse 3 der Sekundärspule 4 angebracht, wobei er teilweise oder auch ganz in das Gehäuse 3 eingebaut sein kann, wie es in Fig. 4 angedeutet ist. In diesem Fall entfällt die Vergleichsmöglichkeit zwischen Messsignalen unterschiedlicher Sensoren als Erkennungskriterium. Es bleibt jedoch die Möglichkeit der Beobachtung von zeitlichen Änderungen des von dem Sensor 18 abgegebenen Messsignals, die auf einen sich bewegenden Fremdkörper 11 hindeuten. Bei einem aktiven Sensor, der wellenförmige Signale aussendet und reflektierte Signale empfängt, kommt darüber hinaus die Signallaufzeit zwischen Aussendung und Empfang als Erkennungskriterium für einen Fremdkörper 11 in Betracht, wenn die Laufzeit bei Reflexion am gegenüberliegenden Gehäuse 8 der Primärspule 2 bekannt ist.

Es könnte auch hier ein passiver Sensor 18 eingesetzt werden. Bei diesem könnte es sich beispielsweise um einen elektronischen Bildsensor handeln. In diesem Fall könnte in der Auswertungseinrichtung 16 ein Bild der oberen Oberfläche des Gehäuses 8 der Primärspule 2 gespeichert sein, welches nach dem Abstellen des Fahrzeugs 1 mit dem von dem Sensor 18 gelieferten Bild verglichen wird. Um die Erkennung eines Fremdkörpers 11 zu erleichtern, könnte die Oberfläche des Gehäuses 8 mit einem charakteristischen Muster versehen sein, in dem ein Fremdkörper 11 als Unterbrechung optisch deutlich auffallen würde. Der verwendete Spektralbereich kann zur Vermeidung einer Beeinflussung durch die Umgebungslichtverhältnisse auch außerhalb des sichtbaren Bereichs, z.B. im Infrarotbereich liegen. Auch könnte das Messsignal des Sensors 18, das hier die Form eines Bildsignals hätte, zeitlich aufgezeichnet und auf Änderungen hin überwacht werden, die auf die Bewegung eines Fremdkörpers 11 hindeuten würden.

Hinsichtlich der Kommunikation mit der Steuereinheit 7 der Ladestation sowie der Ausgabe einer Warnung über eine Anzeigeeinrichtung 17 gilt für die vereinfachte Variante mit nur einem einzigen Sensor 18 dasselbe wie für eine Lösung mit mehreren Sensoren 12 bis 15. Umgekehrt könnten auch bei einer Lösung mit mehreren Sensoren diese ganz oder teilweise in das Gehäuse 3 eingebaut sein, anstatt wie in den Figuren 2 und 3 außerhalb desselben angebracht zu sein.

Obgleich die vorausgehend beschriebenen Ausführungsbeispiele eine sekundärseitige, d.h. fahrzeugseitige Anordnung der Sensoren 12 bis 15 bzw. 18 und der Auswertungseinrichtung 16 zeigen, wäre es ebenso gut möglich, diese Systemkomponenten beide primärseitig, d.h. bei oder an dem Gehäuse 8 der Primärspule 2 anzuordnen oder sie ganz oder teilweise in dieses Gehäuse 8 zu integrieren. In diesem Fall wäre das gesamte System zur Detektion eines Fremdkörpers in der Ladestation konzentriert. Es wäre aber auch denkbar, auf einer Seite, z.B. fahrzeugseitig, einen oder mehrere Sender wellenförmiger Signale und auf der anderen Seite, z.B. primärseitig, mehrere Empfänger als Sensoren vorzusehen, so dass die Wellenausbreitung durch einen Fremdkörper 11 in dem Zwischenraum 10 gestört würde und der Fremdkörper 11 anhand dessen empfängerseitig detektiert werden könnte. Des weiteren könnten Sensoren auch auf beiden Seiten, d.h. zugleich fahrzeugseitig und primärseitig angebracht sein.

Anstelle einer Konzentration in einer zentralen Auswertungseinrichtung 16 könnte die Funktion der Signalverarbeitung auch beispielhaft auf mehrere einzelne Sensoren 12 bis 15 bzw. 18 verteilt sein, so dass in einer reduzierten zentralen Auswertungseinrichtung dann nur noch Statusmeldungen solcher Sensoren 12 bis 15 zusammenlaufen würden, welche anzeigen, ob ein Sensor 12 bis 15 jeweils für sich einen Fremdkörper 11 erkannt hat oder nicht. In diesem Fall würden Teile der Auswertungseinrichtung 16 durch die Sensoren 12 bis 15 bzw. 18 realisiert sein.

Des weiteren könnte die Auswertungseinrichtung 16 auch mit einer Auswertungseinrichtung für Signale anderer in oder an dem Fahrzeug 1 zu anderen Zwecken vorgesehener Sensoren kombiniert werden. Insbesondere existieren Fahrzeuge mit berührungslosen Abstandssensoren, die im Rahmen sogenannter Fahrerassistenzsysteme dazu verwendet werden, den Fahrer beim Einparken zu unterstützen, und/oder ihm während der Fahrt bei der Einhaltung eines ausreichenden Sicherheitsabstandes zu einem vorausfahrenden Fahrzeug behilflich zu sein. Wenn ein Fahrzeug 1 ohnehin mit einem derartigen System ausgestattet ist und somit über eine Auswertungseinrichtung für Signale von berührungslosen Abstandssensoren verfügt, kann es unter Kostengesichtspunkten von Vorteil sein, keine separate Auswertungseinrichtung 16 für die erfindungsgemäße Detektionseinrichtung vorzusehen, sondern die Signale aller berührungslosen Abstandssensoren des Fahrzeugs 1, einschließlich der durch die vorliegende Erfindung hinzukommenden Sensoren (12 bis 15; 18), in einer einzigen zentralen Auswertungseinrichtung zu verarbeiten, d.h. eine in dem Fahrzeug 1 ohnehin vorhandene Auswertungseinrichtung lediglich in ihrem Funktionsumfang entsprechend zu erweitern.

## Patentansprüche

1. Vorrichtung zur induktiven Übertragung elektrischer Energie von einer stationären Einheit mit mindestens einer Primärinduktivität (2) zu einem benachbart zu dieser stehenden Fahrzeug (1) mit mindestens einer Sekundärinduktivität (4), wobei die stationäre Einheit oder das Fahrzeug (1) eine Einrichtung zur Detektion des Vorhandenseins eines Gegenstandes (11) innerhalb eines vorbestimmten Raumes, der zumindest den während der Energieübertragung zwischen der Primärinduktivität (2) und der Sekundärinduktivität (4) liegenden Raum (10) umfasst, aufweist, **dadurch gekennzeichnet, dass** die Detektionseinrichtung mehrere berührungslose Sensoren (12 bis 15) und eine mit diesen verbundene Auswertungseinrichtung (16) mit einer Vergleichseinrichtung aufweist, welche die von den einzelnen Sensoren (12 bis 15) abgegebenen Signale untereinander vergleicht und ein Maß für eine Abweichung der Signale untereinander ermittelt, dass die Auswertungseinrichtung (16) eine Vergleichseinrichtung aufweist, welche die von den Sensoren (12 bis 15) abgegebenen Signale mit einem Referenzwert oder Referenzsignal vergleicht und ein Maß für eine Abweichung von dem Referenzwert oder Referenzsignal ermittelt, und/oder dass die Auswertungseinrichtung (16) ein Maß für eine zeitliche Änderung der von den Sensoren (12 bis 15) abgegebenen Signale ermittelt, und dass die Auswertungseinrichtung (16) mindestens einen Ausgang aufweist, an dem bei einer Abweichung der Signale untereinander, die ein vorbestimmtes Mindestmaß überschreitet, ein Signal ausgegeben wird, welches die Anwesenheit eines Fremdkörpers (11) anzeigt, wenn auch eine Abweichung von dem Referenzwert oder Referenzsignal ein vorbestimmtes Mindestmaß überschreitet, und/oder eine zeitliche Änderung ein vorbestimmtes Mindestmaß überschreitet.

2. Vorrichtung nach Anspruch 1, **dadurch gekennzeichnet, dass** die Sensoren (12 bis 15) der Detektionseinrichtung zumindest teilweise in das gleiche Gehäuse (8; 3) wie die Primärinduktivität (2) oder die Sekundärinduktivität (4) der Energieübertragungsvorrichtung eingebaut oder daran angebaut sind.

3. Vorrichtung nach einem der Ansprüche 1 oder 2, **dadurch gekennzeichnet, dass** die Sensoren (12 bis 15) Ultraschall-, Radar- oder Infrarotsensoren oder elektronische Bildsensoren sind.

4. Vorrichtung nach einem der Ansprüche 1 bis 3, **dadurch gekennzeichnet, dass** die Auswertungseinrichtung (16) mindestens einen Ausgang aufweist, an dem bei einer Abweichung von dem Referenzwert oder Referenzsignal, die ein vorbestimmtes Mindestmaß überschreitet, und/oder bei einer Abweichung der Signale untereinander, die ein vorbestimmtes Mindestmaß überschreitet, und/oder bei einer zeitlichen Änderung, die ein vorbestimmtes Mindestmaß überschreitet, ein Signal ausgegeben wird, welches die Anwesenheit eines Fremdkörpers (11), anzeigt.

5. Vorrichtung nach Anspruch 4, **dadurch gekennzeichnet, dass** die Auswertungseinrichtung (16) eine Zeitmesseinrichtung aufweist, mittels derer die Dauer der ein vorbestimmtes Mindestmaß überschreitenden Abweichung und/oder zeitlichen Änderung gemessen wird, und dass die Ausgabe des Signals, welches die Anwesenheit eines Fremdkörpers (11) anzeigt, nur dann erfolgt, wenn die gemessene Dauer eine vorbestimmte Mindestdauer überschreitet.

6. Vorrichtung nach Anspruch 4 oder 5, **dadurch gekennzeichnet, dass** ein Ausgang der Auswertungseinrichtung (16) mit einer Anzeigeeinrichtung (17) verbunden ist, und dass ein an dem Ausgang ausgegebenes Signal, welches die Anwesenheit eines Fremdkörpers (11) anzeigt, die Ausgabe eines Warnsignals durch die Anzeigeeinrichtung (17) auslöst.

7. Vorrichtung nach einem der Ansprüche 4 bis 6, **dadurch gekennzeichnet, dass** ein Ausgang der Auswertungseinrichtung (16) mit einer Steuereinheit (7), welche eine Stromversorgungseinheit (6) der Primärinduktivität (2) steuert, verbunden ist, und dass ein an dem Ausgang ausgegebenes Signal, welches die Anwesenheit eines Fremdkörpers (11) anzeigt, eine Deaktivierung der Stromversorgung der Primärinduktivität (2) durch die Steuereinheit (7) auslöst.

8. Vorrichtung nach Anspruch 7, **dadurch gekennzeichnet, dass** durch die Auswertungseinrichtung (16) über den mit der Steuereinheit (7) verbundenen Ausgang eine Reaktivierung der Stromversorgung der Primärinduktivität (2) durch die Steuereinheit (7) ausgelöst wird, wenn das Signal, welches die Anwesenheit eines Fremdkörpers (11) anzeigt, nicht mehr ausgegeben wird.

9. Vorrichtung nach einem der Ansprüche 1 bis 8, **dadurch gekennzeichnet, dass** die Auswertungseinrichtung (16) mit einer Auswertungseinrichtung für Signale anderer in oder an dem Fahrzeug (1) vorgesehener Sensoren kombiniert ist.

## Claims

1. Device for inductive transmission of electrical energy from a stationary unit with at least one primary inductance (2) to a vehicle (1) standing adjacent to it and having at least one secondary inductance (4), wherein the stationary unit or the vehicle (1) exhibits a device for detection of the presence of an object (11) within a predetermined space which comprises at least the space (10) lying between the primary inductance (2) and the secondary inductance (4) during the transmission of energy, **characterised in that** the detection device exhibits a plurality of contactless sensors (12 to 15) and an evaluation device (16) connected to these with a comparison device which compares the signals emitted by the individual sensors (12 to 15) with one another and determines a measurement for a deviation between the signals,
that the evaluation device (16) exhibits a comparison device which compares the signals emitted by the sensors (12 to 15) with a reference value or reference signal and determines a measurement for a deviation from the reference value or reference signal, and/or
that the evaluation device (16) determines a measurement for a time change in the signals emitted by the sensors (12 to 15),
and that the evaluation device (16) exhibits at least one output at which a signal is emitted which indicates the presence of a foreign body (11) in the event of a deviation between the signals which exceeds a predetermined minimum measurement, if also a deviation from the reference value or reference signal exceeds a predetermined minimum measurement and/or a time change exceeds a predetermined minimum measurement.

2. Device according to claim 1, **characterised in that** the sensors (12 to 15) of the detection device are at least partially installed in the same housing (8; 3) as the primary inductance (2) or the secondary inductance (4) of the energy transmission device or mounted to it.

3. Device according to one of claims 1 or 2, **characterised in that** the sensors (12 to 15) are ultrasound, radar or infrared sensors or electronic image sensors.

4. Device according to one of claims 1 to 3, **characterised in that** the evaluation device (16) exhibits at least one output at which a signal is emitted which indicates the presence of a foreign body (11) in the event of a deviation from the reference value or reference signal which exceeds a predetermined minimum measurement, and/or in the event of a deviation between the signals which exceeds a predetermined minimum measurement, and/or in the event of a time change which exceeds a predetermined minimum measurement.

5. Device according to claim 4, **characterised in that** the evaluation device (16) exhibits a time measuring device by means of which the duration of the deviation exceeding a predetermined minimum measurement and/or time change is measured, and **in that** the signal which indicates the presence of a foreign body (11) is only outputted when the measured duration exceeds a predetermined minimum duration.

6. Device according to claim 4 or 5, **characterised in that** an output of the evaluation device (16) is connected with an indicating device (17) and **in that** a signal appearing at the output, indicating the presence of a foreign body (11), triggers the emission of a warning signal by the indicating device (17).

7. Device according to one of claims 4 to 6, **characterised in that** an output of the evaluation device (16) is connected with a control unit (7) which controls a power supply unit (6) of the primary inductance (2), and **in that** a signal appearing at the output, indicating the presence of a foreign body (11), triggers a deactivation of the power supply of the primary inductance (2) by the control unit (7).

8. Device according to claim 7, **characterised in that** when the signal indicating the presence of a foreign body (11) is no longer outputted, a reactivation of the power supply of the primary inductance (2) by the control unit (7) is triggered by the evaluation device (16) through the output connected with the control unit (7).

9. Device according to one of claims 1 to 8, **characterised in that** the evaluation device (16) is combined with an evaluation device for signals of other sensors provided in or on the vehicle (1).

## Revendications

1. Dispositif de transfert inductif d'énergie électrique d'une unité stationnaire présentant au moins une inductance primaire (2) à un véhicule (1) se trouvant à proximité de cette dernière et présentant au moins une inductance secondaire (4), sachant que l'unité stationnaire ou le véhicule (1) présentent un système servant à détecter la présence d'un objet (11) à l'intérieur d'un espace prédéterminé, qui englobe au moins l'espace (10) se trouvant lors du transfert d'énergie entre l'inductance primaire (2) et l'inductance secondaire (4), **caractérisé en ce que** le système de détection présente plusieurs capteurs (12 à 15) sans contact et un système d'analyse (16) relié à ces derniers et doté d'un système de comparaison, qui compare entre eux les signaux émis par les divers capteurs (12 à 15) et détermine une mesure pour un écart entre les signaux,
le système d'analyse (16) présente un système de comparaison, qui compare les signaux émis par les capteurs (12 à 15) à une valeur de référence ou à un signal de référence et détermine une mesure pour un écart par rapport à la valeur de référence ou au signal de référence, et/ou
le système d'analyse (16) détermine une mesure pour une modification temporelle des signaux émis par les capteurs (12 à 15), et
le système d'analyse (16) présente au moins une sortie, au niveau de laquelle en présence d'un écart des signaux les uns par rapport aux autres, qui dépasse une mesure minimale prédéterminée, un signal est émis, qui signale la présence d'un corps étranger (11).,si un écart par rapport à la valeur de référence ou au signal de référence dépasse une mesure minimale prédéterminée et/ou si une modification temporelle dépasse une mesure minimale prédéterminée.

2. Dispositif selon la revendication 1 , **caractérisé en ce que** les capteurs (12 à 15) du système de détection sont intégrés au moins en partie dans le même boîtier (8, 3) que l'inductance primaire (2) et l'inductance secondaire (4) du dispositif de transfert d'énergie ou y sont installés.

3. Dispositif selon l'une quelconque des revendications 1 ou 2, **caractérisé en ce que** les capteurs (12 à 15) sont des capteurs à ultrasons, des capteurs radars ou des capteurs infrarouges ou des capteurs d'images électroniques.

4. Dispositif selon l'une quelconque des revendications 1 à 3, **caractérisé en ce que** le système d'analyse (16) présente au moins une sortie, au niveau de laquelle en présence d'un écart par rapport à la valeur de référence ou au signal de référence, qui dépasse une mesure minimale prédéterminée, et/ou en présence d'un écart des signaux les uns par rapport aux autres, qui dépasse une mesure minimale prédéterminée, et/ou en présence d'une modification temporelle, qui dépasse une mesure minimale prédéterminée, un signal est émis, qui signale la présence d'un corps étranger (11).

5. Dispositif selon la revendication 4, **caractérisé en ce que** le système d'analyse (16) présente un système de mesure du temps, au moyen duquel est mesurée la durée de l'écart et/ou de la modification temporelle dépassant une mesure minimale prédéterminée, et **en ce que** l'émission d'un signal qui signale la présence d'un corps étranger (11) n'est alors effectuée que lorsque la durée mesurée dépasse une durée minimale prédéterminée.

6. Dispositif selon la revendication 4 ou 5, **caractérisé en ce qu'**une sortie du système d'analyse (16) est reliée à un système de signalisation (17), et **en ce qu'**un signal émis au niveau de la sortie, lequel signale la présence d'un corps étranger (11), déclenche l'émission d'un signal d'alerte par le système de signalisation (17).

7. Dispositif selon l'une quelconque des revendications 4 à 6, **caractérisé en ce qu'**une sortie du système d'analyse (16) est reliée à une unité de commande (7), qui commande une unité d'alimentation en courant (6) de l'inductance primaire (2), et **en ce qu'**un signal émis au niveau de la sortie, lequel signale la présence d'un corps étranger (11), déclenche une désactivation de l'alimentation en courant de l'inductance primaire (2) par l'unité de commande (7).

8. Dispositif selon la revendication 7, caractérisé ce qu'une réactivation de l'alimentation en courant de l'inductance primaire (2) par l'unité de commande (7) est déclenchée par le système d'analyse (16) par l'intermédiaire de la sortie reliée à l'unité de commande (7), lorsque le signal, qui signale la présence d'un corps étranger (11), n'est plus émis.

9. Dispositif selon l'une quelconque des revendications 1 à 8, **caractérisé en ce que** le système d'analyse (16) est combiné à un système d'analyse pour des signaux d'autres capteurs prévus dans ou au niveau du véhicule (1).
